# EUROPÄISCHE PATENTANMELDUNG

(11) **EP 0 842 830 A1**
(43) Veröffentlichungstag der Anmeldung: **20.05.1998**
(21) Anmeldenummer: 97119808.0
(22) Anmeldetag: 12.11.1997
(51) Int. Cl.: B60R 22/24

(54) **Umlenkbeschlag für Sicherheitsgurte**

(30) Priorität: 18.11.1996 DE 19647651
(71) Anmelder: TAKATA (EUROPE) VEHICLE SAFETY TECHNOLOGY GmbH, D-89081 Ulm (DE)
(72) Erfinder: Scholler, Oskar, 89269 Vöhringen (DE); Pleyer, Matthias, 89250 Senden (DE)
(74) Vertreter: Schmidt, Christian

(57) **Zusammenfassung**

Die Erfindung betrifft einen Umlenkbeschlag für Sicherheitsgurte mit einem an einem Fahrzeugteil befestigbaren Bügel (11), der aus einem Steg (12) und zwei an dessen Enden anschließenden Schenkeln (13, 14) besteht, zwischen deren freien Enden sich ein Lagerschaft (15) erstreckt, auf dem eine Umlenkrolle (16) um eine Drehachse (22) drehbar gelagert ist, deren Länge zumindest im wesentlichen der Breite des darüber geführten Gurtes entspricht. Erfindungsgemäß ist hierbei vorgesehen, daß der Bügel (11) aus Aluminiumguß besteht und die Umlenkrolle (16) zumindest an den beiden Enden kreiszylindrisch ist.

## Beschreibung

Die Erfindung betrifft einen Umlenkbeschlag für Sicherheitsgurte, wie sie bei Sicherheitsgurtvorrichtungen in Kraftfahrzeugen verwendet werden nach dem Oberbegriff des Patentanspruchs 1.

Derartige Umlenkbeschläge sind in verschiedenen Varianten bekannt (z.B. EP 0 726 187 A1). Der Bügel besteht dabei im allgemeinen aus kunststoffüberzogenen Stahlstanzstücken.

Weiter ist es bereits bekannt geworden (DE 29601566 U1), einen Umlenkbeschlag für einen Sicherheitsgurt als geschlossenen Ring aus Aluminium oder einer Aluminiumlegierung auszuführen.

Während kunststoffüberzogene Stahlbügel in der Herstellung aufwendig sind und bei Beschädigung des Kunststoffüberzuges korrodieren können, besitzt ein als geschlossener Ring ausgebildeter Umlenkbeschlag aus Aluminium den Nachteil, daß zwischen dem Beschlag und dem Sicherheitsgurt erhebliche Reibungskräfte wirken.

Das Ziel der vorliegenden Erfindung besteht darin, einen Umlenkbeschlag der eingangs genannten Gattung zu schaffen, dessen Gewicht in Verbindung mit einer Steigerung der Leistungsfähigkeit deutlich reduziert ist, d.h., daß eine Gewichtseinsparung bei reduzierter Reibung erzielt werden soll. Außerdem soll der erfindungsgemäße Umlenkbeschlag einfach herstellbar, kompakt aufgebaut und so ausgebildet sein, daß auf den von ihm aufgenommenen Sicherheitsgurt keine Reibungskräfte wirken, wobei auch ein Verklemmen des Gurtes wirksam vermieden werden soll.

Zur Lösung dieser Aufgabe sind die Merkmale des kennzeichnenden Teils des Anspruches 1 vorgesehen. Unter Aluminium ist sowohl reines Aluminium als auch jede Aluminiumlegierung zu verstehen. Es kann sich hierbei um Aluminium- bzw. Aluminiumlegierungsguß handeln, doch kann es zur Erzielung einer höheren Festigkeit auch zweckmäßig sein, eine geschmiedete Version aus Aluminium bzw. Aluminiumlegierung zu verwenden.

Vorteilhafte Weiterbildungen der Erfindung entnimmt man den Unteransprüchen.

Der Erfindungsgedanke ist also darin zu sehen, daß nicht der gesamte Beschlag, sondern lediglich der Bügel aus Aluminiumguß oder Aluminiumlegierungsguß besteht, während die Umlenkrolle aus beliebigem Material bestehen kann. Bevorzugt ist sie jedoch ebenfalls aus Aluminium oder einer Aluminiumlegierung oder Kunststoff gefertigt.

Besonders vorteilhaft ist der Übergang von der Umlenkrolle zum Bügel nach Anspruch 3, weil hierdurch ein Stauchen und Verklemmen des Gurtes während seiner Bewegung weitgehend vermieden wird.

Vorteilhaft sind weiter die nach Anspruch 4 vorgesehenen Lagerblöcke, weil sie der Gesamtanordnung die erforderliche hohe Festigkeit verleihen.

Eine optimale Gurtführung wird durch die Maßnahmen nach den Ansprüchen 5 bis 8 gewährleistet.

Für eine einwandfreie und feste Lagerung der Umlenkrolle sind die Dimensionierungen nach Anspruch 9 zweckmäßig.

Eine Befestigung an einer geeigneten Säule des Kraftfahrzeuges wird durch die Ausbildung nach Anspruch 10 ermöglicht.

Für eine hohe Festigkeit der Lagerböcke ist die Ausführungsform nach den Ansprüchen 11 oder 12 von Bedeutung. Die Rillen (und gegebenenfalls auch Rippen) erhöhen die Größe der Oberfläche, welche maßgebend für die Festigkeit ist. Durch das Vorsehen von Rillen wird außerdem das Gewicht der Bügel herabgesetzt. Die Rillen erniedrigen auch das Trägheitsmoment um die Anschraubachse, was nicht nur beim Straffen, sondern insbesondere auch bei unfallbedingten Beschleunigungen wichtig ist.

Wird die Materialwahl nach den Ansprüchen 13 bis 16 getroffen, so ist durch den Stahlschaft eine besonders feste und bruchsichere Lagerung der Umlenkrolle gewährleistet.

Es ist auch möglich, den Bügel mit dem Lagerschaft als ein einziges Bauteil gemäß Anspruch 17 herzustellen und dann eine axial zweigeteilte Umlenkrolle nachträglich auf dem gegossenen Lagerschaft zu montieren.

Festigkeit und Gewicht des Bügels können weiter durch die Maßnahme nach Anspruch 18 vorteilhaft beeinflußt werden.

Die Erfindung wird im folgenden beispielsweise anhand der Zeichnungen beschrieben; in dieser zeigt:
- Figur 1: eine Ansicht eines erfindungsgemäßen Umlenkbeschlages in Richtung der Anschraubachse,
- Figur 2: eine Draufsicht des Gegenstandes der Figur 1,
- Figur 3: einen Schnitt nach Linie III-III in Figur 1,
- Figur 4: eine perspektivische Ansicht des Gegenstandes der Figuren 1 bis 3 schräg von der Seite in etwas verkleinertem Maßstab,
- Figur 5: einen Schnitt analog Figur 3 zur Veranschaulichung einer etwas anderen Lagerung der Umlenkrolle,
- Figur 6: eine Ansicht analog Figur 1 einer weiteren Ausführungsform eines erfindungsgemäßen Umlenkbeschlages,
- Figur 7: eine Draufsicht des Gegenstandes der Figur 6,
- Figur 8: einen Schnitt nach Linie VIII-VIII in Figur 6 und
- Figur 9: eine perspektivische Ansicht des Gegenstandes der Figuren 6 bis 8 schräg von der Seite gesehen in etwas verkleinertem Maßstab.

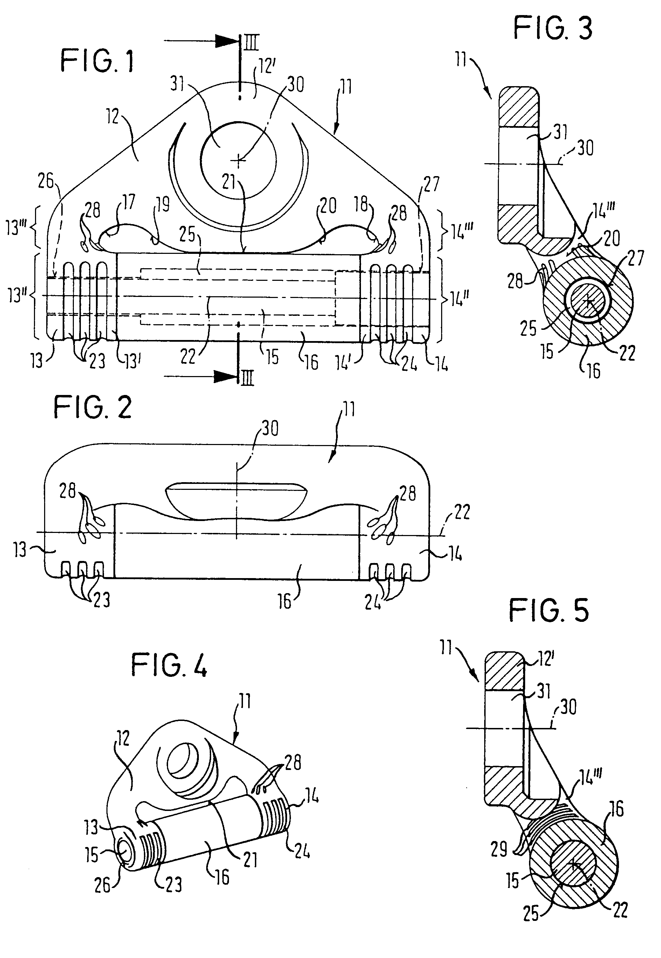

Nach den Figuren 1 bis 4 weist ein aus Aluminium oder einer Aluminiumlegierung bestehender Bügel 11 einen Steg 12 und zwei Schenkel 13, 14 auf.

Der Steg 12 ist in der Mitte zu einem flachen Anschraubbereich 12' erweitert und besitzt dort ein Schraubloch 31 mit einer Anschraubachse 30.

Die Schenkel 13, 14 besitzen am freien Ende im wesentlichen kreiszylindrisch geformte Lagerböcke 13'', 14'', die mit ihren einander gegenüberliegenden Übergangsbereichen 13', 14' stetig in eine kreiszylindrische Umlenkrolle 16 aus Aluminium oder Kunststoff übergehen, welche auf einem durch Bohrungen 25, 26, 27 in der Umlenkrolle 16 bzw. den Lagerböcken 13'', 14'' hindurchgesteckten Lagerschaft 15 aus Stahl um eine Drehachse 22 drehbar gelagert ist. Der Lagerschaft 15 und die Bohrungen 25, 26, 27 können in der in Figur 1 gestrichelt angedeuteten Weise abgestuft sein. Zweckmäßig sind in geeignete konzentrische Ausnehmungen an den beiden Enden der Umlenkrolle 16 aus geeignetem Lagermaterial bzw. Kugeln oder Rollen bestehende Lagerschalen eingepreßt oder sonstwie befestigt, die auf dem Lagerschaft 15 gleiten bzw. abrollen.

An die Lagerböcke 13'', 14'' schließen sich in Richtung des Steges 12 gebogene Übergangsstücke 13''', 14''' an.

An ihrer Innenseite weisen die Übergangsstücke 13''', 14''' jeweils einen konkaven Bogen 17 bzw. 18 auf, der im Übergangsbereich 13', 14' stetig in den Umfang der Umlenkrolle 16 übergeht und in entgegengesetzter Richtung über einen Winkel von ca. 220° verläuft und dort in konvexe Bogenstücke 19 bzw. 20 übergeht, die schließlich in einem geraden Stück 21 münden, welches parallel zur Drehachse 22 der Umlenkrolle 16 verläuft.

Über den Umfang der Lagerböcke 13'', 14'' erstrecken sich außerhalb der Übergangsstücke 13''', 14''' jeweils drei einen axialen Abstand voneinander aufweisende Rillen 23, 24. Im inneren Krümmungsbereich der Übergangsstücke 13''', 14''' sind mehrere längliche Rippen 28 nebeneinander vorgesehen.

Die Rillen 23, 24 und Rippen 28 dienen der Verstärkung des Bügels 11 an den betreffenden Stellen. Durch die Rillen 23, 24 wird überdies das Gewicht der Lagerböcke 13'', 14'' herabgesetzt, so daß auch das Trägheitsmoment um die Anschraubachse 30 entsprechend herabgesetzt ist.

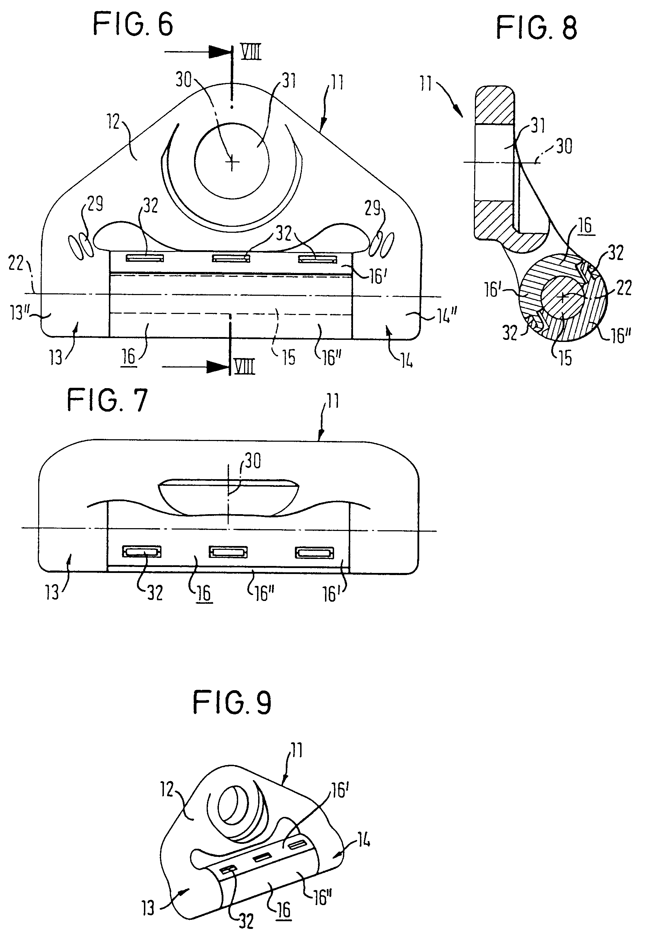

Figur 5 zeigt eine ähnliche Ausführungsform, bei der jedoch der Lagerschaft 15 durchgehend einen konstanten Durchmesser aufweist, so daß auch die Bohrungen 25, 26, 27 überall den gleichen Durchmesser haben.

In Figur 5 ist außerdem dargestellt, daß innen an den Übergangsstücken 13''', 14''' auch sich in Umfangsrichtung erstreckende Nuten 29 zwecks Vergrößerung der Oberfläche und Verringerung der Materialmenge vorgesehen sein können.

Der Lagerschaft 15 ist in allen Fällen zumindest in einem, vorzugsweise in beiden Lagerböcken 13'', 14'' z.B. durch Preßpassung axial festgelegt. Die Bohrungen 26, 27 in den Lagerböcken 13'', 14'' müssen auf der von der Umlenkrolle 16 abgewandten Stirnseite nicht unbedingt beide durchgehend sein. Vielmehr kann eine Bohrung, z.B. die Bohrung 26 als zur Umlenkrolle 16 hin offenes Sackloch ausgebildet sein, während die gegenüberliegende Bohrung 27 durchgehend ist, um von dort den Lagerschaft 15 einstecken zu können.

Beim Ausführungsbeispiel nach den Figuren 6 bis 9, in welchen gleiche Bezugszahlen entsprechende Bauelemente wie in den Figuren 1 bis 5 bezeichnen, ist der Lagerschaft 15 mit dem Bügel 11 als ein einziges Bauelement aus Aluminium oder einer Aluminiumlegierung gegossen. Um auf den Lagerschaft 15 die Umlenkrolle 16 montieren zu können, ist diese axial in zwei Hälften 16', 16'' unterteilt. Die beiden Hälften 16', 16'' können von entgegengesetzten Seiten her auf den Lagerschaft 15 aufgesetzt und durch an den Berührungsstellen vorgesehene Schnappmechanismen 32 zu einer kompletten Umlenkrolle 16 verbunden werden.

Die aneinanderliegenden Stirnseiten der Lagerböcke 13'', 14'' einerseits und der Umlenkrolle 16 andererseits sind eben ausgebildet und stehen senkrecht auf der Drehachse 23. Innerhalb der Umlenkrolle 16 können spezielle Gleitlager vorgesehen sein, die mit entsprechenden Gegenlagern auf dem Lagerschaft 15 zusammenwirken.

### Bezugszeichenliste

- 11: Bügel
- 12: Steg
- 12': Anschraubbereicn
- 13: Schenkel
- 13': Übergangsbereich
- 13'': Lagerbock
- 13''': Übergangsstück
- 14: Schenkel
- 14': Übergangsbereich
- 14'': Lagerbock
- 14''': Übergangsstück
- 15: Lagerschaft
- 16: Umlenkrolle
- 16': eine Hälfte der Umlenkrolle
- 16'': andere Hälfte der Umlenkrolle
- 17: konkaver Bogen
- 18: konkaver Bogen
- 19: konvexes Bogenstück
- 20: konvexes Bogenstück
- 21: gerades Stück
- 22: Drehachse
- 23: Rille
- 24: Rille
- 25: Bohrung
- 26: Bohrung
- 27: Bohrung
- 28: Rippe
- 29: Nut
- 30: Anschraubachse
- 31: Schraubloch
- 32: Schnappmechanismus

## Patentansprüche

1. Umlenkbeschlag für Sicherheitsgurte mit einem an einem Fahrzeugteil befestigbaren Bügel (11), der aus einem Steg (12) und zwei an dessen Enden anschließenden Schenkeln (13, 14) besteht, zwischen deren freien Enden sich ein Lagerschaft (15) erstreckt, auf dem eine Umlenkrolle (16) um eine Drehachse (22) drehbar gelagert ist, deren Länge zumindest im wesentlichen der Breite des darüber geführten Gurtes entspricht,
dadurch gekennzeichnet,
daß der Bügel (11) aus Aluminium besteht und die Umlenkrolle (16) zumindest in den beiden Endbereichen kreiszylindrisch ist.

2. Umlenkbeschlag nach Anspruch 1,
dadurch gekennzeichnet,
daß die Umlenkrolle (16) vollständig kreiszylindrisch ist.

3. Umlenkbeschlag nach Anspruch 1 oder 2,
dadurch gekennzeichnet,
daß die Schenkel (13, 14) im Übergangsbereich (13', 14') zur Umlenkrolle (16) eine der Form des angrenzenden Endbereiches der Umlenkrolle (16) entsprechende kreiszylindrische Form aufweisen, d.h. axial stetig in die Umfangsfläche der Umlenkrolle (16) übergehen.

4. Umlenkbeschlag nach einem der vorhergehenden Ansprüche,
dadurch gekennzeichnet,
daß jeder Schenkel (13, 14) einen mit der Umlenkrolle (16) axial ausgerichteten Lagerbock (13'', 14'') aufweist, der bis auf den Bereich, wo er in ein Übergangsstück (13''', 14''') zum Steg (12) übergeht, kreiszylindrisch ausgebildet ist, wobei der Durchmesser der Lagerböcke (13'', 14'') vorzugsweise zumindest im wesentlichen gleich dem Durchmesser der Umlenkrolle (16) ist.

5. Umlenkbeschlag nach einem der vorhergehenden Ansprüche,
dadurch gekennzeichnet,
daß das Übergangsstück (13''', 14''') auf der der Umlenkrolle (16) zugewandten Seite stetig in diese übergeht und - ausgehend vom Übergangsbereich (13', 14') - innen in Form eines konkaven Bogens (17, 18) in den Steg (12) übergeht, wo der Bogen sich gegebenenfalls fortsetzt.

6. Umlenkbeschlag nach Anspruch 5,
dadurch gekennzeichnet,
daß der Bogen (17, 18) einen Radius von 3 bis 9 mm, insbesondere 4 bis 8 mm und vorzugsweise etwa 5 bis 6 mm aufweist.

7. Umlenkbeschlag nach Anspruch 5 oder 6,
dadurch gekennzeichnet,
daß der konkave Bogen (17, 18) sich über einen Winkel von wenigstens 180° erstreckt.

8. Umlenkbeschlag nach Anspruch 7,
dadurch gekennzeichnet,
daß der konkave Bogen (17, 18) sich über einen Winkel von mehr als 180°, insbesondere von 200 bis 270° erstreckt und anschließend über ein konvexes Bogenstück (19, 20) stetig in ein parallel zur Drehachse (22) verlaufendes gerades Randstück (22) übergeht.

9. Umlenkbeschlag nach einem der vorhergehenden Ansprüche,
dadurch gekennzeichnet,
daß die Axiallänge jedes Lagerbockes (13'', 14'') 25 bis 35 % und insbesondere etwa 30 % der Länge der Umlenkrolle (16) beträgt.

10. Umlenkbeschlag nach einem der vorhergehenden Ansprüche,
dadurch gekennzeichnet,
daß der Befestigungsbereich (12') des Steges (12) gegenüber der Ebene des Bügels (11) vorzugsweise um einen Winkel von 15° bis 35°, insbesondere etwa 30° geneigt ist.

11. Umlenkbeschlag nach einem der Ansprüche 4 bis 10,
dadurch gekennzeichnet,
daß auf dem kreiszylindrischen Teil der Umfangsfläche der Lagerböcke (13'', 14'') vorzugsweise in Umfangsrichtung verlaufende Rillen (23, 24) vorgesehen sind.

12. Umlenkbeschlag nach Anspruch 11,
dadurch gekennzeichnet,
daß im axialen Abstand jeweils drei parallele Rillen (23, 24) vorgesehen sind.

13. Umlenkbeschlag nach einem der vorhergehenden Ansprüche,
dadurch gekennzeichnet,
daß die Umlenkrolle (16) aus Kunststoff oder Aluminium besteht.

14. Umlenkbeschlag nach einem der vorhergehenden Ansprüche,
dadurch gekennzeichnet,
daß der Lagerschaft (15) aus Stahl besteht.

15. Umlenkbeschlag nach einem der vorhergehenden Ansprüche,
dadurch gekennzeichnet,
daß der Lagerschaft (15) durch entsprechende Bohrungen (25, 26, 27) in der Umlenkrolle (16) bzw. den Lagerböcken (13'', 14'') hindurchgesteckt ist.

16. Umlenkbeschlag nach einem der vorhergehenden Ansprüche,
dadurch gekennzeichnet,
daß der Lagerschaft (15) vorzugsweise durch Wärmebehandlung und/oder Preßpassung und/oder Verstemmen und/oder Verschrauben an wenigstens einem der Lagerböcke (13'', 14'') axial festgelegt ist.

17. Umlenkbeschlag nach einem der Ansprüche 1 bis 13,
dadurch gekennzeichnet,
daß der Lagerschaft (15) mit dem Bügel (11) als ein Stück gegossen ist und die Umlenkrolle (16) axial zweigeteilt sowie anschließend auf den Lagerschaft (15) aufgesetzt ist.

18. Umlenkbeschlag nach einem der vorhergehenden Ansprüche,
dadurch gekennzeichnet,
daß zur Verstärkung in den beanspruchten Bereichen des Bügels (11) rippenartige Materialerhebungen (28) und/oder nutenartige Vertiefungen (29) vorgesehen sind.
